# EUROPÄISCHE PATENTANMELDUNG

(11) **EP 2 105 704 A2**
(43) Veröffentlichungstag der Anmeldung: **30.09.2009**
(21) Anmeldenummer: 09156187.8
(22) Anmeldetag: 25.03.2009
(51) Int. Cl.: G01B 21/04

(54) **Verfahren und Messsystem zum Charakterisieren einer Abweichung eines Istmaßes eines Bauteils von einem Nennmaß des Bauteils**

(30) Priorität: 28.03.2008 DE 102008016025
(71) Anmelder: MTU Aero Engines GmbH, 80995 München (DE)
(72) Erfinder: Kriegmair, Josef, 85465 Langenpreising (DE)

(57) **Zusammenfassung**

Die Erfindung betrifft ein Verfahren zum Charakterisieren einer Abweichung eines Istmaßes eines Bauteils (10) von einem Nennmaß des Bauteils (10), bei welchem zumindest die Schritte a) Ermitteln wenigstens eines das Istmaß charakterisierenden Messwerts (18) an einer Position des Bauteils (10) mittels einer Messeinrichtung, b) Bereitstellen eines Nennwerts (20), mittels welchem das Nennmaß in Abhängigkeit der Position des Messwerts (18) charakterisiert wird, c) Ermitteln eines räumlichen Abstands (r) zwischen dem Messwert (18) und dem Nennwert (20), d) Bereitstellen eines Grenzkriteriums, mittels welchem in Abhängigkeit der Position des Messwerts (18) eine zulässige Abweichung vom Nennwert (20) charakterisiert wird und e) Bestimmen eines die Abweichung charakterisierenden Toleranzausnutzungswerts des Messwerts (18) in Abhängigkeit des räumlichen Abstands (r) und des Grenzkriteriums durchgeführt werden. Die Erfindung betrifft weiterhin ein Messsystem zum Charakterisieren einer Abweichung eines Istmaßes eines Bauteils (10) von einem Nennmaß des Bauteils (10).

## Beschreibung

Die Erfindung betrifft ein Verfahren und ein Messsystem zum Charakterisieren einer Abweichung eines Istmaßes eines Bauteils von einem Nennmaß des Bauteils.

Derartige Verfahren und Messsysteme sind bereits aus dem Stand der Technik bekannt und dienen zum Überprüfen von Form- und Lagetoleranzen von Bauteilen. Jedes Bauteil besitzt dabei eine ideale, über das Nennmaß definierte geometrische Gestalt, die durch eine entsprechende Beschreibung - beispielsweise in einer Zeichnung oder einem Rechenmodell - festgelegt werden kann. Aufgrund von unvermeidbaren Fertigungstoleranzen bei der Erstellung des konkreten Bauteils ist diese ideale Gestalt üblicherweise jedoch nicht oder zumindest nicht für das gesamte Bauteil zu erreichen. Es ist daher wichtig, die Abweichung eines Ist- von einem Nennmaß des Bauteils ausreichend genau charakterisieren zu können, um das Bauteil gegebenenfalls nachzuarbeiten oder zu verwerfen.

Als nachteilig an den bekannten Verfahren und Messsystemen zum Charakterisieren dieser Abweichung ist dabei der Umstand anzusehen, dass diese nicht zur Bewertung von Bauteilen mit komplexen Geometrien geeignet sind. Aufgabe der vorliegenden Erfindung ist es daher, ein Verfahren wie ein Messsystem der eingangs genannten Art zu schaffen, mittels welchen auch Abweichungen des Istmaßes bei Bauteilen mit komplexen Geometrien charakterisierbar sind.

Die Aufgabe wird erfindungsgemäß durch ein Verfahren zum Charakterisieren einer Abweichung eines Istmaßes eines Bauteils von einem Nennmaß eines Bauteils gemäß Patentanspruch 1 sowie durch ein entsprechendes Messsystem gemäß Patentanspruch 10 gelöst. Vorteilhafte Ausgestaltungen mit zweckmäßigen Weiterbildungen der Erfindung sind den jeweiligen Unteransprüchen angegeben, wobei vorteilhafte Ausgestaltungen des Verfahrens als vorteilhafte Ausgestaltungen des Messsystems und umgekehrt anzusehen sind.

Ein erfindungsgemäßes Verfahren, mittels welchem eine Abweichung eines Istmaßes von einem Nennmaß auch bei einem Bauteil mit komplexer Geometrie charakterisierbar ist, umfasst zumindest die Schritte a) Ermitteln wenigstens eines das Istmaß charakterisierenden Messwerts an einer Position des Bauteils mittels einer Messeinrichtung, b) Bereitstellen eines Nennwerts, mittels welchem das Nennmaß in Abhängigkeit der Position des Messwerts charakterisiert wird, c) Ermitteln eines räumlichen Abstands zwischen dem Messwert und dem Nennwert, d) Bereitstellen eines Grenzkriteriums, mittels welchem in Abhängigkeit der Position des Messwerts eine zulässige Abweichung vom Nennwert charakterisiert wird und e) Bestimmen eines die Abweichung charakterisierenden Toleranzausnutzungswerts des Messwerts in Abhängigkeit des räumlichen Abstands und des Grenzkriteriums. Das erfindungsgemäße Verfahren erlaubt somit im Gegensatz zum Stand der Technik eine ortsabhängige Normierung und damit eine Homogenisierung von bislang inhomogenen Abweichungen bzw. von durch das Grenzkriterium aufgespannten Toleranzbändern. Der Messwert und der Nennwert werden dabei vorzugsweise als räumliche Koordinaten ermittelt bzw. bereitgestellt. Auf diese Weise können beispielsweise auch Winkeltoleranzen, bei welchen sich der räumliche Abstand zwischen dem Messwert und dem Nennwert mit zunehmendem Abstand vom gemeinsamen Anfangspunkt der den Winkel einschließenden Halbgeraden erhöht, ermittelt und zuverlässig charakterisiert werden. Entsprechendes gilt für Bauteile mit konvexen oder konkaven Außenkonturen, Bohrungen oder dergleichen.

In einer vorteilhaften Ausgestaltung ist vorgesehen, dass die Schritte a) bis e) mehrfach und/oder an mehreren Positionen des Bauteils durchgeführt werden. Hierdurch ist eine weitere Verbesserung der Genauigkeit der Charakterisierung ermöglicht, da eine Mehrzahl von Messwerten berücksichtigt und somit die Messgenauigkeit verbessert wird. Dabei kann vorgesehen sein, dass die Abweichung des Istmaßes vom Nennmaß des Bauteils mehrfach an einer Position charakterisiert wird, um eventuelle Messfehler zu minimieren. Alternativ oder zusätzlich kann die Charakterisierung auch an mehreren Positionen des Bauteils durchgeführt werden, so dass die Abweichungen über einen Teil- bzw. Flächenbereich des Bauteils charakterisierbar sind. Dies erlaubt eine besonders zuverlässige Entscheidung darüber, ob das Bauteil nachbearbeitet oder verworfen werden muss.

Weitere Vorteile ergeben sich, in dem als Grenzkriterium ein oberer und/oder ein unterer Grenzwert verwendet wird. Hierdurch kann die Abweichung des Istmaßes vom Nennmaß des Bauteils präzise dahingehend charakterisiert werden, ob der Messwert über bzw. unter dem Nennwert liegt. Dies liefert wertvolle Hinweise auf gegebenenfalls erforderliche Nachbearbeitungsschritte.

Dabei hat es sich in Abhängigkeit der konkreten geometrischen Ausgestaltung des Bauteils als vorteilhaft gezeigt, wenn der obere und der untere Grenzwert mit dem gleichen und/oder einem unterschiedlichen räumlichen Abstand vom Nennwert gewählt werden. Hierdurch ist eine ortsaufgelöste und optimal an die jeweilige Geometrie des Bauteils bzw. an dessen Einsatzzweck anpassbare Definierung eines Toleranzbandes ermöglicht.

In einer weiteren vorteilhaften Ausgestaltung der Erfindung ist vorgesehen, dass der räumliche Abstand in Schritt c) anhand einer Normalen und/oder einer Höhenschnittlinie auf das Nennmaß an der Position des Bauteils ermittelt wird. Auf diese Weise kann die jeweils geeignetste Bezugsebene für den Toleranzausnutzungswert flexibel unter optimaler Berücksichtigung der geometrischen Ausgestaltung des Bauteils gewählt werden.

In einer weiteren vorteilhaften Ausgestaltung der Erfindung ist vorgesehen, dass mittels einer optischen Anzeigevorrichtung ein dem in Schritt e) bestimmten Toleranzausnutzungswert zugeordneter Farbwert angezeigt wird. Aufgrund der mit Hilfe der Erfindung durchgeführten ortsabhängigen Normierung der Abweichung ist anhand des zugeordneten Farbwerts schnell und einfach erkennbar, wie stark die zulässige Abweichung an der betreffenden Position des Bauteils ausgenutzt wurde bzw. ob der jeweilige Messwert und damit das Istmaß unterhalb oder oberhalb der maximal zulässigen Abweichung liegt. Wenn mehrere Messwerte an mehreren Positionen des Bauteils ermittelt werden, können zudem daraus ableitbare Flächenbereiche des Bauteils je nach Toleranzausnutzung eingefärbt werden. Die Erfindung ermöglicht es, dass Messwerten mit gleicher Toleranzausnutzung der selbe Farbwert zugeordnet wird, obwohl der absolute Abstand zwischen den einzelnen Messwerten und Nennwerten unterschiedlich ist. Dies ermöglicht eine besonders schnelle Sichtung und Bewertung von Bauteilen mit komplexen Geometrien, so dass beispielsweise Winkelabweichungen bei Trichtern oder Bohrungen sowie Abweichungen bei Bauteilen wie Triebswerksschaufeln von Gasturbinen problemlos charakterisierbar sind.

Dabei hat es sich in weiterer Ausgestaltung als vorteilhaft gezeigt, dass der Farbwert dem Toleranzausnutzungswert anhand einer variablen Werteschar und/oder anhand vorbestimmter Fixwerte und/oder symmetrisch zugeordnet wird. Eine Zuordnung anhand einer variablen Werteschar ermöglicht es dabei beispielsweise unterschiedliche Bereich des Bauteils und damit unterschiedliche Grenzkriterien besonders einfach zu berücksichtigen. Bei einer Zuordnung anhand vorbestimmter Fixwerte kann beispielsweise vorgesehen sein, dass Toleranzausnutzungswerte, die das Grenzkriterium nicht erfüllen, unabhängig vom konkreten Wert des räumlichen Abstands zwischen dem Mess- und dem Nennwert mit dem selben Farbwert versehen werden. Demgegenüber kann Toleranzausnutzungswerten, bei denen die Abweichung des Istmaßes vom Nennmaß innerhalb der durch das Grenzkriterium definierten zulässigen Abweichung liegt, in Abhängigkeit des jeweiligen räumlichen Abstands ein unterschiedlicher Farbwert zugeordnet werden. Hierzu kann beispielsweise ein mit der Größe des Abstands korrespondierendes Farbspektrum verwendet werden, so dass beispielsweise die Helligkeit des Farbwerts einen Rückschluss auf die Ausnutzung des Toleranzbandes erlaubt. Bei einer symmetrischen Zuordnung des Farbwerts erhalten demgegenüber Toleranzausnutzungswerte, deren Messwerte betragsmäßig denselben ortsabhängig normierten Abstand zum Nennwert aufweisen - z.B. ±30% - oder der gleichen Ausnutzungsklasse angehören - z.B. innerhalb der zulässigen Abweichung oder außerhalb der zulässigen Abweichung vom Nennwert - den selben Farbwert.

Weitere Vorteile ergeben sich hierbei, indem als variable Werteschar der Bereich der mehreren in Schritt a) ermittelten Messwerte verwendet wird. So kann beispielsweise über den bezüglich seines Abstands vom Normwert kleinsten ermittelten Messwert ein erster Farbwert und über den bezüglich seines Abstands vom Normwert größten ermittelten Messwert ein zweiter Farbwert bestimmt werden, zwischen welchen anschließend ein Farbspektrum verteilt wird. Dies ermöglicht eine besonders einfache und schnelle Beurteilung der Abweichungen des Bauteils unabhängig davon, ob das Istmaß eine positiven oder negative Abweichung vom Nennmaß aufweist.

Weitere Vorteile ergeben sich, indem das Bauteil ein Turbinenbauteil, insbesondere einer Gasturbine, ist. In Verbindung mit der erfindungsgemäß verbesserten Charakterisierbarkeit von Abweichungen des Istmaßes ist hierbei eine besonders schnelle, kostengünstige und zuverlässige Beurteilung der Güte dieser Bauteilklasse ermöglicht, welche einerseits komplexe Geometrien besitzt und bei der andererseits die Einhaltung der Maßhaltigkeit von besonderer Bedeutung ist.

Ein weiterer Aspekt der Erfindung betrifft ein Messsystem zum Charakterisieren einer Abweichung eines Istmaßes eines Bauteils von einem Nennmaß des Bauteils, wobei das Messsystem eine Messeinrichtung zum Ermitteln wenigstens eines das Istmaß charakterisierenden Messwerts an einer Position des Bauteils, eine Speichereinrichtung, mittels welcher ein Nennwert und ein Grenzkriterium bereitstellbar sind, wobei mittels des Nennwerts das Nennmaß in Abhängigkeit der Position des Messwerts und mittels des Grenzkriteriums eine zulässige Abweichung vom Nennwert in Abhängigkeit der Position des Messwerts charakterisierbar ist, eine Ermittlungseinrichtung zum Ermitteln eines räumlichen Abstands zwischen dem Messwert und dem Nennwert und eine Bestimmungseinrichtung zum Bestimmen eines die Abweichung charakterisierenden Toleranzausnutzungswert des Messwerts in Abhängigkeit des räumlichen Abstands und des Grenzkriteriums umfasst. Das erfindungsgemäße Messsystem ermöglicht es damit im Gegensatz zum Stand der Technik die Abweichung des Istmaßes ortsabhängig zu normieren, so dass auch Bauteile mit komplexen Geometrien schnell, einfach und zuverlässig bezüglich ihrer Maßhaltigkeit beurteilbar sind. Die im Zusammenhang mit dem erfindungsgemäßen Verfahren vorgestellten Ausführungsformen und Weiterbildungen sowie deren Vorteile gelten entsprechend für das erfindungsgemäße Messsystem.

Dabei hat es sich in weiterer Ausgestaltung als vorteilhaft gezeigt, dass die Messeinrichtung als optische und/oder akustische und/oder mechanische Messeinrichtung ausgebildet ist. Dies ermöglicht ein besonders exakte Ermittlung des Messwerts und damit eine entsprechend zuverlässige Charakterisierung der Abweichung des Istmaßes an der jeweiligen Position des Bauteils. Die Messeinrichtung kann hierbei beispielsweise einen Computertomographen, einen Laser, einen Ultraschalltransceiver, einen Messschieber, eine Formlehre oder dergleichen umfassen.

In einer weiteren vorteilhaften Ausgestaltung der Erfindung ist vorgesehen, dass die Ermittlungseinrichtung und/oder die Bestimmungseinrichtung und/oder die Speichereinrichtung Teil eines Datenverarbeitungssystems ist bzw. sind. Dies erlaubt eine schnelle, einfache und kostengünstige Verarbeitung auch großer Datenmengen, wodurch die Charakterisierung der Abweichung des Istmaßes weiter verbessert wird. Zudem kann das Messsystem auf diese Weise tragbar ausgebildet sein und damit besonders flexibel verwendet werden. Der bzw. die Mess- oder Nennwerte können auf diese Weise als sogenanntes CAD-Modell der Ist- bzw. Soll-Geometrie des Bauteils zur Verfügung gestellt werden.

Eine besonders schnelle und einfache Bewertung der charakterisierten Abweichung ist in einer weiteren Ausgestaltung dadurch ermöglicht, dass das Messsystem eine optische Anzeigevorrichtung umfasst, mittels welcher ein dem Toleranzausnutzungswert zugeordneter Farbwert anzeigbar ist. Die Anzeigevorrichtung kann dabei einen Bildschirm, ein stereoskopisches Display, einen Drucker oder dergleichen umfassen.

Weitere Vorteile, Merkmale und Einzelheiten der Erfindung ergeben sich anhand der nachfolgenden Beschreibung von Ausführungsbeispielen sowie anhand der Zeichnung, in welchen gleiche oder funktionsgleiche Elemente mit identischen Bezugszeichen versehen sind. Dabei zeigen:
- Fig. 1: einen schematischen und ausschnittsweisen Querschnitt eines ersten Bauteils mit zwei, einen Winkel einschließenden Wandbereichen;
- Fig. 2: einen schematischen und ausschnittsweisen Querschnitt des in Fig. 1 gezeigten Bauteils, wobei zusätzlich ein ein Istmaß charakterisierender Messwert dargestellt ist;
- Fig. 3: einen schematischen Querschnitt eines zweiten Bauteils mit einer gebogenen Außenkontur;
- Fig. 4: einen schematischen Querschnitt des in Fig. 3 gezeigten Bauteils, wobei zusätzlich ein ein Istmaß charakterisierender Messwert dargestellt ist;
- Fig. 5: einen schematischen und ausschnittsweisen Querschnitt des ersten Bauteils, wobei mehrere Messwerte dargestellt sind, für die jeweilige Toleranzausnutzungswerte bestimmt sind, denen über eine variable Verteilung Farbwerte zugeordnet werden;
- Fig. 6: einen schematischen und ausschnittsweisen Querschnitt des ersten Bauteils, wobei mehrere Messwerte dargestellt sind, für die Toleranzausnutzungswerte bestimmt sind, denen anhand vorbestimmter Fixwerte entsprechende Farbwerte zugeordnet werden; und
- Fig. 7: einen schematischen und ausschnittsweisen Querschnitt des ersten Bauteils, wobei mehrere Messwerte dargestellt sind, für die Toleranzausnutzungswerte bestimmt werden, denen Farbwerte symmetrisch zugeordnet werden.

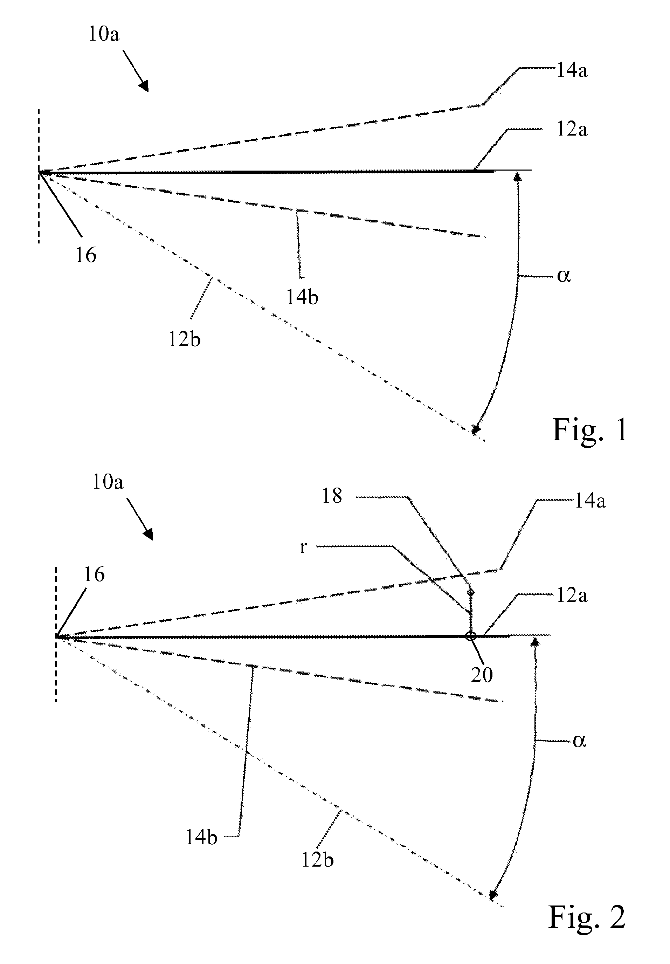

Fig. 1 zeigt einen schematischen und ausschnittsweisen Querschnitt eines ersten Bauteils 10a mit zwei, einen Winkel α einschließenden Wandbereichen 12a, 12b. Das Bauteil 10a ist als Turbinenbauteil einer Gasturbine ausgebildet, wobei die Wandbereiche 12a, 12b eine trichterförmige Kühlluftbohrung begrenzen. An Kühlluftbohrungen werden dabei hohe Anforderungen hinsichtlich Lage und Ausprägung gestellt, um eine gewünschte Kühlleistung für das Bauteil 10a sicherstellen zu können. Der Winkel α beträgt dabei im vorliegenden Ausführungsbeispiel 15°, wobei eine zulässige Abweichung der Winkeltoleranz ±2° beträgt. Diese Winkeltoleranz stellt damit ein Grenzkriterium dar, welches durch einen, eine Werteschar umfassenden oberen Grenzwert 14a und einen, eine Werteschar umfassenden unteren Grenzwert 14b dargestellt ist. Die Wandbereiche 12a, 12b definieren mit anderen Worten ein Nennmaß des Bauteils 10a, wohingegen der obere und der untere Grenzwert 14a, 14b eine maximal zulässige Abweichung eines Istmaßes von diesem Nennmaß angeben. Wie in Fig. 1 deutlich wird erhöht sich dabei der Abstand zwischen dem Nennmaß und dem zulässigen Istmaß mit zunehmendem Abstand vom gemeinsamen Anfangspunkt 16 der beiden Wandbereiche 12a, 12b.

Fig. 2 zeigt einen schematischen Querschnitt des ersten Bauteils 10a, wobei zusätzlich ein ein Istmaß charakterisierender Messwert 18 dargestellt ist. Der Messwert 18 befindet sich in einem räumlichen Abstand r zu einem Nennwert 20, mittels welchem das Nennmaß des Wandbereichs 12a an der Position des Messwerts 18 charakterisiert wird. Sowohl der Messwert 18 als auch der Nennwert 20 werden dabei vorzugsweise in Form von räumlichen Koordinaten ermittelt bzw. bereitgestellt, wobei in diesem Fall ein geeignetes Koordinatensystem - beispielsweise ein kartesisches Koordinatensystem - als Bezugssystem verwendet wird. Das Istmaßes des Bauteils 10a weist somit im vorliegenden Ausführungsbeispiel eine Abweichung vom Nennmaß auf. Da sich der Messwert 18 innerhalb der das Grenzkriterium darstellenden Grenzwerte 14a, 14b befindet, besitzt das Bauteil 10a trotz der Abweichung die erforderliche Maßhaltigkeit und kann ohne weitere Nachbehandlungsschritte für seinen jeweiligen Einsatzweck verwendet werden. Demgegenüber würde der Messwert 18 jedoch das Grenzkriterium verletzen, wenn er bei gleichem räumlichen Abstand r näher am Anfangspunkt 16 liegen würde. Mit anderen Worten ist das durch die Grenzwerte 14a, 14b aufgespannte Toleranzband örtlich inhomogen. Die reine Kenntnis des räumlichen Abstands r erlaubt somit keine direkte Aussage darüber, ob das Istmaß des Bauteils 10a eine unzulässige Abweichung vom Nennmaß darstellt.

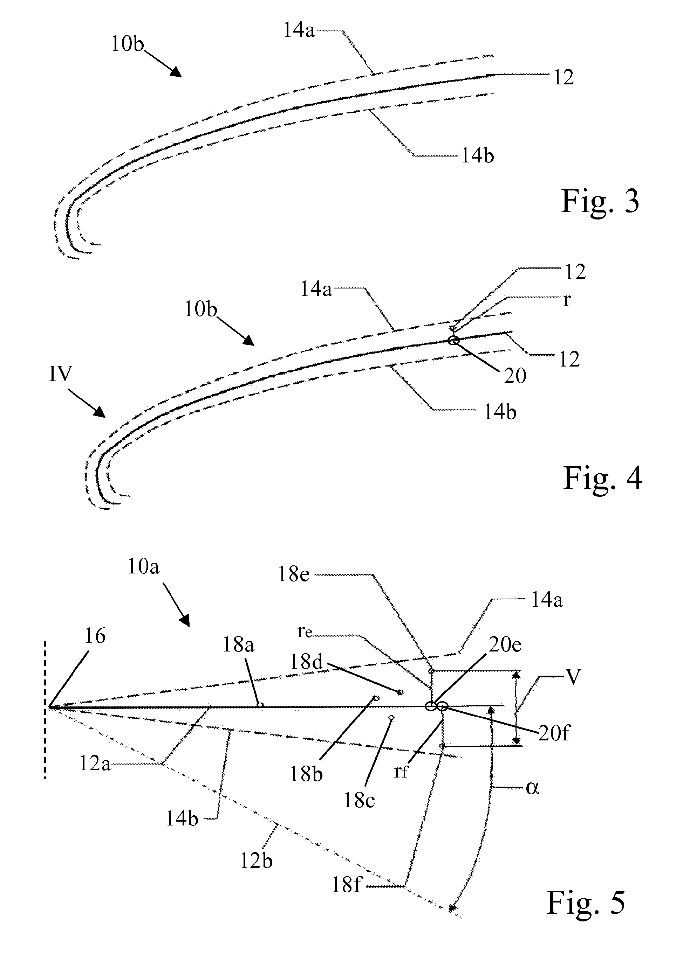

Fig. 3 zeigt einen schematischen Querschnitt eines zweiten Bauteils 10b, welches als Triebwerkschaufel einer Gasturbine ausgebildet ist und im Unterschied zum ersten Bauteil 10a einen Wandbereich 12 mit einer im Querschnitt konvexen Kontur (Airfoil) aufweist. Dem Wandbereich 12 sind erneut ein oberer und ein unterer Grenzwert 14a, 14b zugeordnet, welche ein Grenzkriterium für eine zulässige Abweichung eines Istmaßes vom durch den Wandbereich 12 definierten Nennmaß des Bauteils 10b definieren. Dabei ist insbesondere erkennbar, dass die Grenzwerte 14a, 14b nicht parallel zum Wandbereich 12 verlaufen, so dass die zulässige Abweichung eines Istmaßes ebenfalls ortsabhängig ist.

Fig. 4 zeigt einen schematischen Querschnitt des zweiten Bauteils 10b, wobei zusätzlich der das Istmaß charakterisierende Messwert 18 dargestellt ist. Der Messwert 18 befindet sich auch in diesem Fall innerhalb des Toleranzbereichs und besitzt einen räumlichen Abstand r gegenüber dem das Nennmaß charakterisierenden Nennwert 20. Auch in diesem Fall ist zu beachten, dass Messwerte 18, die beispielsweise an einer mit Pfeil IV bezeichneten Position des Bauteils 10b ermittelt würden, bei betragsmäßig gleichem Abstand r das Grenzkriterium nicht mehr erfüllen würden.

Fig. 5 zeigt einen schematischen und ausschnittsweisen Querschnitt des ersten Bauteils 10a, wobei mehrere Messwerte 18a-f dargestellt sind. Die Messwerte 18a-f, die das Istmaß des Bauteils 10a an den betreffenden Positionen charakterisieren, werden zunächst mittels einer Messeinrichtung ermittelt. Die Messeinrichtung kann dabei grundsätzlich als optische, akustische oder mechanische Messeinrichtung ausgebildet sein. Für jeden Messwert 18a-f wird ein entsprechender Nennwert 20a-f bereitgestellt, mittels welchem das Nennmaß in Abhängigkeit der Position des jeweiligen Messwerts 18a-f charakterisiert wird. Aus Übersichtlichkeitsgründen sind im vorliegenden Ausführungsbeispiel nur die den Messwerten 18e, 18f zugeordneten Nennwerte 20e, 20f abgebildet. Die jeweiligen räumlichen Abstände r_{a-f} der Messwerte 18a-f von ihren zugeordneten Nennwerten 20a-f können wahlweise anhand einer Normalen und/oder einer Höhenschnittlinie auf das Nennmaß an der jeweiligen Position des Bauteils 10a ermittelt werden. Unter Berücksichtigung der oberen und unteren Grenzwerte 14a, 14b kann anschließend für jeden Messwert 18a-f ein die jeweilige Abweichung des Istmaßes vom Nennmaß des Bauteils 10a charakterisierender Toleranzausnutzungswert bestimmt werden. Hierzu kann beispielsweise für Messwerte 18, die keine Abweichung vom Nennmaß aufweisen und demnach einen räumlichen Abstand r=0 besitzen, ein Toleranzausnutzungswert von 0% bestimmt werden. Für Messwerte, die auf dem oberen Grenzwert 14a liegen, kann ein Toleranzausnutzungswert von 100% und für Messwerte 18, die auf dem unteren Grenzwert 14b liegen, ein Toleranzausnutzungswert -100% bestimmt werden. Der obere und der untere Grenzwert 14a, 14b spannen somit ein Toleranzband auf. Messwerte 18, die zwischen dem oberen und dem unteren Grenzwert 14a, 14b liegen, erhalten dementsprechende Toleranzausnutzungswerte zwischen ±100%. Hierdurch wird eine ortsabhängige Normierung der Messwerte 18 erzielt, wodurch etwaige Abweichungen des Istmaßes vom Nennmaß des Bauteils 10a trotz der komplexen Geometrie besonders schnell und einfach charakterisierbar sind. Zur weiteren Beschleunigung und Erleichterung der Bewertung der Güte des Bauteils 10b werden den bestimmten Toleranzausnutzungswerten Farbwerte zugeordnet und anschließend mittels einer optischen Anzeigevorrichtung dargestellt. Die absoluten Werte der Messwerte 18 können bei Bedarf wieder über das Toleranzband, die jeweilige Position gegenüber dem Bauteil 10a, der Art der Bezugsebene (Normale oder Höhenschnittlinie) und den bestimmten Toleranzausnutzungswert abgeleitet werden. Bei einer ausreichenden Anzahl an Mess- und Nennwerten 18, 20 kann somit ein zumindest teilweises dreidimensionales Modell der Ist-Geometrie des Bauteils 10a ermittelt und mit der nominalen Geometrie verglichen werden.

Im vorliegenden Ausführungsbeispiel werden den Toleranzausnutzungswerten Farbwerte anhand einer variablen Werteschar zugeordnet. Als variable Werteschar werden dabei vorteilhafterweise die Messwerte 18a-f verwendet, wobei dem Messwert 18e mit dem numerisch größten Abstand rₑ ein erster Farbwert und dem Messwert 18f mit dem numerisch kleinsten Abstand r_{f} ein zweiter Farbwert zugeordnet wird. Zwischen den beiden Farbwerten wird dann ein geeignetes Farbspektrum V verteilt. Hierdurch ist es möglich, die Maßhaltigkeit des Bauteils 10a besonders schnell, einfach und komfortabel zu prüfen und zu bewerten. Anhand des jeweiligen Farbwerts ist sofort erkennbar, wie stark die zulässige Toleranz ausgenutzt wurde bzw. ob die jeweiligen Messpunkte 18a-f innerhalb oder außerhalb des Grenzkriteriums liegen. Messwerte 18a-f mit gleichen Toleranzausnutzungswerten erhalten dabei denselben Farbwert, obwohl ihr absoluter Abstand r_{a-f} verschieden sein kann.

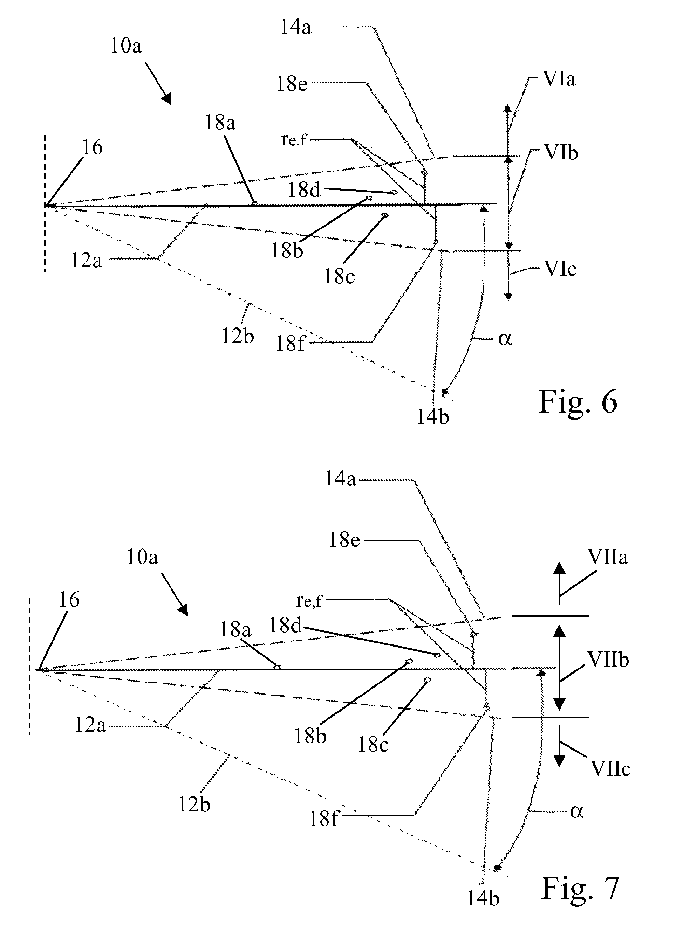

Fig. 6 zeigt einen schematischen und ausschnittsweisen Querschnitt des ersten Bauteils 10a. Im Unterschied zum vorhergehenden Ausführungsbeispiel werden hierbei den Toleranzausnutzungswerten Farbwerte anhand vorbestimmter Fixwerte zugeordnet. Hierzu erhalten alle Toleranzausnutzungswerte, die das Grenzkriterium nicht erfüllen und sich außerhalb der Grenzwerte 14a bzw. 14b befinden, einen vorbestimmten ersten Farbwert, mittels welchem eine nicht zulässige Maßhaltigkeit des Bauteils 10a signalisiert wird. Demgegenüber erhalten Toleranzausnutzungswerte, die sich im Rahmen des durch die Grenzwerte 10a, 14b aufgespannten Toleranzbandes befinden, einen einheitlichen zweiten, vom ersten Farbwert abweichenden Farbwert. Alternativ kann vorgesehen sein, dass Toleranzausnutzungswerten zwischen dem oberen und dem unteren Grenzwert 14a, 14b ein mit dem jeweiligen Abstand r korrespondierender Farbwert eines vorbestimmten Farbspektrums zugeordnet werden. Auf diese Weise erhält man drei Klassen von Toleranzausnutzungswerten VIa-c, von welchen die beiden Klassen VIa und VIc eine nicht zulässige Abweichung des Istmaßes des Bauteils 10a vom geforderten Nennmaß charakterisieren.

Fig. 7 zeigt einen schematischen und ausschnittsweisen Querschnitt des ersten Bauteils 10a, wobei die Farbwerte den jeweiligen Toleranzausnutzungswerten der Messwerte 18a-f symmetrisch zugeordnet werden. Hierzu erhalten Messwerte 18 mit betragsmäßig gleichen Toleranzausnutzungswerten - z.B. ±30% - oder Messwerte 18 der gleichen Toleranzausnutzungsklasse - beispielsweise außerhalb der Toleranzklassen VIIa, VIIc oder innerhalb der Toleranzklasse VIIb - denselben Farbwert. Hierdurch ist ebenfalls eine schnelle und einfache Bewertung der Maßhaltigkeit des Bauteils ermöglicht, wobei etwaige Abweichungen des Istmaßes vom Nennmaß unabhängig von der Art der Abweichung erkennbar sind.

## Patentansprüche

1. Verfahren zum Charakterisieren einer Abweichung eines Istmaßes eines Bauteils (10) von einem Nennmaß des Bauteils (10), folgende Schritte umfassend:
a) Ermitteln wenigstens eines das Istmaß charakterisierenden Messwerts (18) an einer Position des Bauteils (10) mittels einer Messeinrichtung;
b) Bereitstellen eines Nennwerts (20), mittels welchem das Nennmaß in Abhängigkeit der Position des Messwerts (18) charakterisiert wird;
c) Ermitteln eines räumlichen Abstands (r) zwischen dem Messwert (18) und dem Nennwert (20);
d) Bereitstellen eines Grenzkriteriums, mittels welchem in Abhängigkeit der Position des Messwerts (18) eine zulässige Abweichung vom Nennwert (20) charakterisiert wird; und
e) Bestimmen eines die Abweichung charakterisierenden Toleranzausnutzungswerts des Messwerts (18) in Abhängigkeit des räumlichen Abstands (r) und des Grenzkriteriums.

2. Verfahren nach Anspruch 1,
**dadurch gekennzeichnet, dass**
die Schritte a) bis e) mehrfach und/oder an mehreren Positionen des Bauteils (10) durchgeführt werden.

3. Verfahren nach Anspruch 1 oder 2,
**dadurch gekennzeichnet, dass**
als Grenzkriterium ein oberer und/oder ein unterer Grenzwert (14a, 14b) verwendet wird.

4. Verfahren nach Anspruch 3,
**dadurch gekennzeichnet, dass**
der obere und der untere Grenzwert (14a, 14b) mit dem gleichen und/oder einem unterschiedlichen räumlichen Abstand vom Nennwert (20) gewählt werden.

5. Verfahren nach einem der Ansprüche 1 bis 4,
**dadurch gekennzeichnet, dass**
der räumliche Abstand (r) in Schritt c) anhand einer Normalen und/oder einer Höhenschnittlinie auf das Nennmaß an der Position des Bauteils (10) ermittelt wird.

6. Verfahren nach einem der Ansprüche 1 bis 5,
**dadurch gekennzeichnet, dass**
mittels einer optischen Anzeigevorrichtung ein dem in Schritt e) bestimmten Toleranzausnutzungswert zugeordneter Farbwert angezeigt wird.

7. Verfahren nach Anspruch 6,
**dadurch gekennzeichnet, dass**
der Farbwert dem Toleranzausnutzungswert anhand einer variablen Werteschar und/oder anhand vorbestimmter Fixwerte und/oder symmetrisch zugeordnet wird.

8. Verfahren nach einem der Ansprüche 2 bis 6 und Anspruch 7,
**dadurch gekennzeichnet, dass**
als variable Werteschar der Bereich der mehreren, in Schritt a) ermittelten Messwerte (18) verwendet wird.

9. Verfahren nach einem der Ansprüche 1 bis 8,
**dadurch gekennzeichnet, dass**
das Bauteil (10) ein Strömungsmaschinenbauteil, insbesondere einer Gasturbine, ist.

10. Messsystem zum Charakterisieren einer Abweichung eines Istmaßes eines Bauteils (10) von einem Nennmaß des Bauteils (10), mit:
- einer Messeinrichtung zum Ermitteln wenigstens eines das Istmaß charakterisierenden Messwerts (18) an einer Position des Bauteils (10);
- einer Speichereinrichtung, mittels welcher ein Nennwert (20) und ein Grenzkriterium bereitstellbar sind, wobei mittels des Nennwerts (20) das Nennmaß in Abhängigkeit der Position des Messwerts (18) und mittels des Grenzkriteriums eine zulässige Abweichung vom Nennwert (20) in Abhängigkeit der Position des Messwerts (18) charakterisierbar ist;
- einer Ermittlungseinrichtung zum Ermitteln eines räumlichen Abstands zwischen dem Messwert (18) und dem Nennwert (20); und
- einer Bestimmungseinrichtung zum Bestimmen eines die Abweichung charakterisierenden Toleranzausnutzungswerts des Messwerts (18) in Abhängigkeit des räumlichen Abstands (r) und des Grenzkriteriums.

11. Messsystem nach Anspruch 10,
**dadurch gekennzeichnet, dass**
die Messeinrichtung als optische und/oder durchstrahlende und/oder akustische und/oder mechanische Messeinrichtung ausgebildet ist.

12. Messsystem nach Anspruch 10 oder 11,
**dadurch gekennzeichnet, dass**
die Ermittlungseinrichtung und/oder die Bestimmungseinrichtung und/oder die Speichereinrichtung Teil eines Datenverarbeitungssystems ist.

13. Messsystem nach einem der Ansprüche 10 bis 12,
**dadurch gekennzeichnet, dass**
dieses eine optische Anzeigevorrichtung umfasst, mittels welcher ein dem Toleranzausnutzungswert zugeordneter Farbwert anzeigbar ist.
